(19) **Europäisches Patentamt**

**European Patent Office**

**Office européen des brevets**

(11) **EP 0 986 763 B1**

(12) **FASCICULE DE BREVET EUROPEEN**

(45) Date de publication et mention
de la délivrance du brevet:
**07.06.2006 Bulletin 2006/23**

(21) Numéro de dépôt: **99910471.4**

(22) Date de dépôt: **01.04.1999**

(51) Int Cl.:
***G01S 3/808*** *(2006.01)*

(86) Numéro de dépôt international:
**PCT/FR1999/000755**

(87) Numéro de publication internationale:
**WO 1999/050684 (07.10.1999 Gazette 1999/40)**

(54) **PROCEDE DE TRI DE SIGNAUX ACOUSTIQUES**

VERFAHREN ZUM AUSSORTIEREN DER VON EINEM FAHRZEUG AUSGESENDETEN
AKUSTISCHEN SIGNALE

METHOD FOR SORTING ACOUSTIC SIGNALS

(84) Etats contractants désignés:
**DE ES FR GB IT NL**

(30) Priorité: **01.04.1998 FR 9804042**

(43) Date de publication de la demande:
**22.03.2000 Bulletin 2000/12**

(73) Titulaire: **ETAT FRANCAIS Représenté par le
Délégué Général
pour l'Armement
00460 Armées (FR)**

(72) Inventeur: **BERTOLINO, Charles
F-83140 Six-Fours (FR)**

(56) Documents cités:
**US-A- 4 750 147          US-A- 4 811 308
US-A- 5 481 505**

**Description**

L'invention concerne un procède de tri des signaux acoustiques émis par un mobile, pouvant être immergé, et que l'on désignera sous le nom de "cible", par élimination de signaux acoustiques parasites, rayonnés notamment par les bâtiments de surface en mer, et qui gênent la détection de signaux acoustiques rayonnés par la "cible".

La présence de nombreux signaux parasites d'énergie supérieure à l'énergie de la "cible" et dus au trafic maritime intense, rend la détection des signaux de la "cible" de plus en plus difficile et complique la tâche de l'opérateur en charge de la détection.

La détection des signaux rayonnés par la "cible" s'opère généralement par la mise en oeuvre d'un ensemble de capteurs acoustiques situés dans un même plan horizontal et disposés en ligne. Ainsi le brevet US5481505 décrit un procédé de tri d'un signal acoustique ou d'une raie spectrale d'énergie maximale E émis par une cible étant immergée parmi une multitude de signaux acoustiques provenant de bruiteurs acoustiques quelconques rayonnant des signaux acoustiques du même type et d'énergie supérieure à l'énergie E et mettant en oeuvre un ensemble de N capteurs acoustiques en mode veille étant immergés, destinés à détecter la présence du signal ou d'une raie spectrale souhaitée. Des moyens de traitement complexes et nécessitant d'importantes ressources de calcul, réalisent une formation de voies, une matrice de covariance, et mettent en oeuvre des algorithmes de traitement du signal, utilisant les divers signaux acoustiques mais aussi un modèle de propagation des ondes acoustiques en milieu marin et un système de poursuite et de classification des pistes détectées pour supprimer les fausses alarmes et localiser la cible recherchée.

Le but de l'invention est de proposer un procédé permettant de réduire simplement et de façon significative, le nombre de signaux parasites indésirables qui perturbent inutilement l'observation des signaux "utiles" à détecter, en vue de diminuer la charge de travail de l'opérateur et qui s'applique à tous les domaines mettant en oeuvre des capteurs acoustiques d'écoute passive ou bouées acoustiques, lignes d'écoute fixes ou mobiles constituées d'hydrophones ou de groupements d'hydrophones, etc..., ainsi qu'à tous les types de signaux acoustiques connus (raies spectrales, bandes étroites, bandes larges, signaux transitoires, etc...)..

L'invention a pour objet un procédé de tri d'un signal acoustique (S) ou d'une raie spectrale (F) d'énergie maximale E, émis par une "cible", pouvant être immergée en mer, parmi une multitude de signaux acoustiques provenant de bruiteurs acoustiques quelconques (W), rayonnant des signaux acoustiques du même type et d'énergie supérieure à l'énergie E, comme défini dans la revendication 1.

Ce procédé demande de remplir les deux conditions suivantes : connaissance préalable du domaine de détection de la "cible" pour chacun des N capteurs acoustiques de l'ensemble en fonction du type de signal acoustique traité et connaissance permanente de la position géographique des N capteurs acoustiques de l'ensemble.

Le principe du procédé, appliqué à un ensemble de capteurs acoustiques pouvant être immergés, consiste à déterminer les zones géographiques à l'intérieur desquelles tout bruiteur rayonnant un signal acoustique sera déclaré comme pouvant être une cible ou non.

Dans le premier cas, le signal détecté est conservé en l'état, et soumis à l'observation de l'opérateur en charge de la détection. Dans le second cas, le signal est éliminé et non soumis à l'observation de l'opérateur.

Lorsque la localisation du bruiteur est nécessaire, la première étape du procédé peut être supprimée.

La présente invention trouve son application dans la réduction du taux de fausses alarmes engendrées par des signaux acoustiques de forte énergie rayonnés par les bruiteurs de surface en mer.

D'autres caractéristiques et avantages de la présente invention apparaitront à la lecture de la description suivante d'un mode de réalisation préférentiel, donné à titre illustratif et non limitatif, et des figures suivantes parmi lesquelles :

- la figure 1 représente un ensemble de N bouées acoustiques d'écoute passive (A, I, J, B) avec N = 4;
- la figure 2 représente le schéma fonctionnel de mise en oeuvre du procédé;
- la figure 3 représente les domaines de détection/cible des N bouées;
- la figure 4 représente les zones géographiques élémentaires de détection d'un bruiteur parasite;
- la figure 5 représente la surface résiduelle de fausses alarmes par application du procédé selon l'invention;
- les figures 6a1, 6a2, 6b1 et 6b2 représentent le principe de détermination de domaines de détection/cible majorants;
- la figure 7 représente le cas de plusieurs domaines de détection/cible pour deux types de bouées différents.

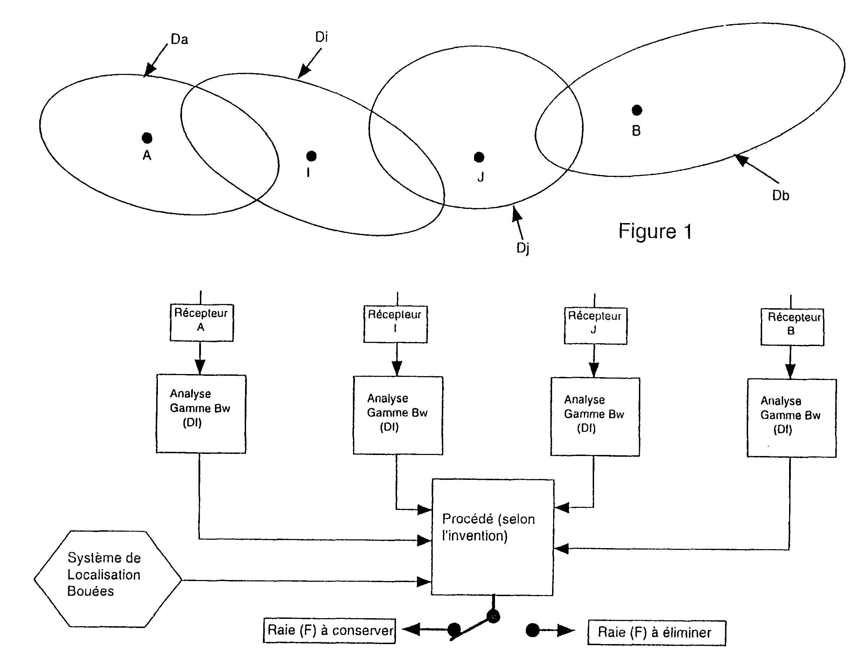

Dans l'exemple représenté sur la figure 1, les signaux acoustiques de chaque bouée sont transmis par VHF à un ensemble de réception qui les achemine, ensuite, à un système d'analyse.

Le type d'analyse proposé, à titre d'exemple non limitatif, consiste à effectuer l'analyse spectrale des signaux reçus par chacune des N bouées dans une gamme de fréquence Bw (de résolution Df) et dont les résultats d'analyse sont tenus à la disposition du procédé.

Le procédé connaît en permanence la position des N bouées de l'ensemble grâce à un système annexe de localisation des bouées.

Selon les règles de l'art dans le domaine, il est possible de localiser géographiquement un bruiteur acoustique à partir du moment où un signal acoustique émis par le bruiteur est détecté par au moins n bouées de l'ensemble à l'eau, avec n = 3 pour les bouées omnidirectionelles, n = 2 pour les autres types de bouées (Difar, BARRA...), et que les N bouées de l'ensemble sont, elles mêmes, localisées par un système de localisation de bouées (GPS, Gonio VHF, etc...).

Outre la nécessaire détection du signal acoustique par n bouées, les règles classiques exigent pour des motifs de précision que le rapport Signal/Bruit (S/B) sur les n bouées soit supérieur à une valeur minimale laissée à la discrétion de l'homme de l'art.

Pour simplifier l'exposé, et sans restreindre la généralité du procédé, on admettra que la valeur minimale du rapport S/B requis est égale à 0 db (seuil limite de détection du signal acoustique).

En conséquence, la seule condition requise pour procéder à la localisation d'un bruiteur se limite à la détection par, au moins, n bouées du signal acoustique émis par le bruiteur.

Toutes les bouées à l'exception du type omnidirectionnel, pour lequel la notion d'orientation n'est pas nécessaire sont munies d'un compas qui permet de connaître en permanence l'orientation d'un axe de référence propre à la bouée par rapport au Nord magnétique.

Les principaux types de signaux (S) envisageables sont les suivants : raies spectrales, bandes étroites, larges bandes, transitoires.

Chaque type de bouée est également associé à un domaine de détection/cible qui peut se définir comme la zone géographique à l'intérieur de laquelle la présence de la "cible" est réputée détectable et en dehors de laquelle la "cible" est réputée non détectable (par le type de bouée concerné).

La détermination du domaine de détection/cible de chaque type de bouée pour un type de signal acoustique (S) d'énergie maximale E émis par la "cible" s'effectue à partir de l'estimation de la portée de détection maximale du type de bouée concerné, qui tient compte à la fois des paramètres suivants parmi d'autres :

.type de signal acoustique (S) à traiter,
.caractéristiques du type de bouée concerné,
.conditions d'environnement du milieu,
.caractéristiques de la cible à détecter, en particulier de l'énergie maximale rayonnée E,
.incertitudes relatives à des paramètres influents,
."marge de sécurité" réaliste destinée à s'affranchir d'éventuels aléas.

D'après les définitions précédentes, on peut considérer que le pourtour délimitatif d'un domaine de détection/cible, relatif à une bouée X, est le lieu géographique où une "cible" rayonnant un type de signal acoustique (S) donné et d'énergie maximale E, provoque, au niveau de la bouée X, un rapport S/B égal au seuil de détection (0 db, dans le cas général).

En conséquence, pour une bouée X donnée et en fonction de la connaissance du domaine de détection/cible du type de la bouée X, de l'orientation de l'axe de référence propre à la bouée X, de la position géographique de la bouée X, on est en mesure de délimiter la disposition géographique du domaine de détection/cible relatif à la bouée X, dans un système d'axes géographiques quelconque.

Dans le cas de plusieurs "cibles" potentielles à détecter et susceptibles d'émettre le même type de signal acoustique (S) mais d'énergies (E) différentes propres à chacune des "cibles" potentielles telles que, par exemple : cible A (Ea), cible B (Eb),........., cible Q (Eq) entraînant l'existence de domaines de détection/cible respectifs particuliers Da, Db,..., Dq, on peut déterminer, pour un type de bouée donné, le domaine de détection/cible majorant unique résultant de la réunion de tous les domaines de détection/cible particuliers (Da, Db,... Dq) relatif au type de signal acoustique (S).

En revenant au cas d'une seule "cible" à traquer, on trouve sur la figure 1 la délimitation des N (au nombre de 4) domaines de détection/cible des bouées A, I, J, B, respectivement désignés par (Da, Di, Dj, Db). On suppose que chacune des N bouées de l'ensemble ne dispose que d'un seul domaine de détection/cible pour un type de signal acoustique (S) donné.

L'usage veut que, compte tenu de la faible immersion des capteurs acoustiques des N bouées de l'ensemble, par rapport à l'éloignement des bruiteurs (y compris la "cible"), le domaine de détection/cible pour un type de bouée donné se ramène à une surface plane contenue dans le plan horizontal des capteurs acoustiques.

Le principe du procédé selon l'invention peut s'appliquer à tous les types de bouées passives ainsi qu'à tous les types de signaux acoustiques (S) rencontrés (raies spectrales, bandes étroites, larges bandes, transitoires, etc...) sous réserve de remplir les 2 conditions suivantes : connaissance de tous les domaines de détection/cible des N bouées de l'ensemble et connaissance permanente de la position géographique des N bouées de l'ensemble.

Dans l'hypothèse où les deux conditions précédentes sont réunies, le procédé peut alors déterminer des zones géographiques dites de "consigne", définies plus loin.

Ensuite, au cours du temps et en fonction du nombre de bouées détectant le signal acoustique émis par le bruiteur, et/ou de la position du bruiteur rayonnant le signal acoustique, le procédé selon l'invention est en mesure de décider si le bruiteur peut être une "cible", auquel cas le signal acoustique détecté est alors conservé en l'état, et soumis à l'observation de l'opérateur.

Si le bruiteur ne peut pas être une "cible", le signal acoustique détecté est alors éliminé et non soumis à l'observation de l'opérateur.

Pour illustrer le fonctionnement du procédé, on s'appuye sur le schéma de principe de la figure 1, en admettant que le signal acoustique considéré soit une raie spectrale (F), analysée dans une gamme de veille (Bw, Df), sur chacune des N bouées de l'ensemble.

On admet, selon la pratique courante, que la raie (F) reste toujours identifiable malgré sa « dopplerisation », due au déplacement du mobile la rayonnant.

On admet également comme il est d'usage en mode veille que toutes les N gammes de veille (Bw,Df), traitant les signaux acoustiques des N bouées, sont paramétrées d'une manière strictement identique (bande Bw, résolution Df, fréquence centrale F0, constante d'intégration...).

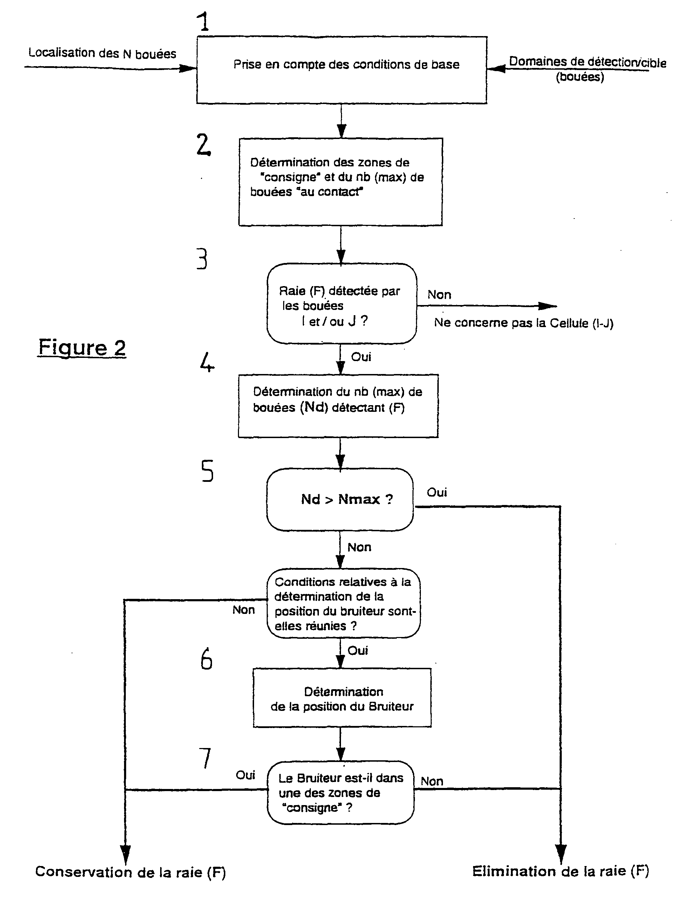

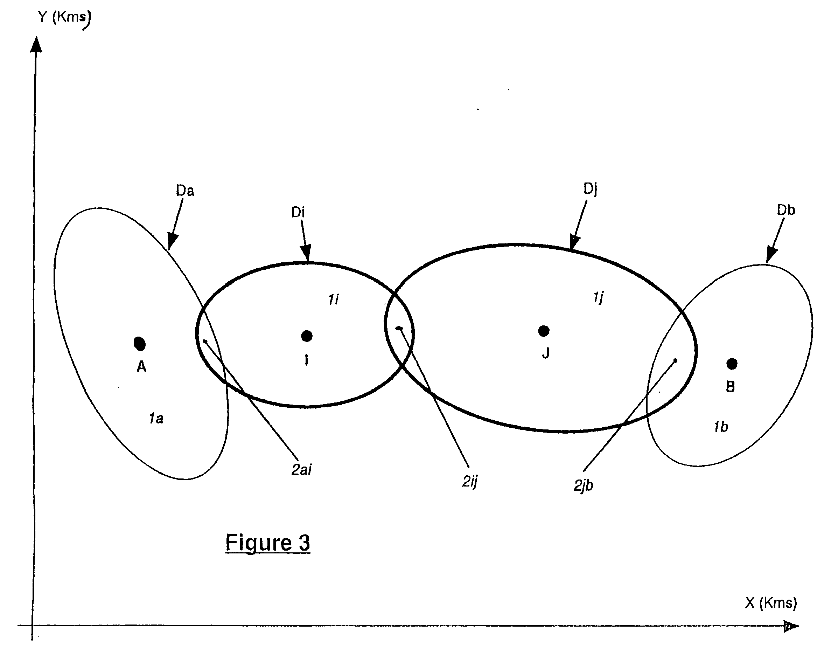

On s'appuie également sur le schéma fonctionnel d'application du procédé représenté sur la figure 2 dont on va appliquer les règles à un ensemble de bouées quelconque tel que représenté sur la figure 3.

Si l'on considère la représentation des domaines de détection/cible (pour N = 4 bouées A, I, J, B) selon la figure 3, on peut constater que l'on est en présence de 4 types de bouée différents et donc de domaines de détection/cible de formes et de dimensions différentes. Les 4 domaines de détection/cible correspondants, dont les limites respectives Da, Di, Dj, Db sont indiquées en figure 3, déterminent des zones géographiques élémentaires dont la désignation adoptée est la suivante :

Zone 1a      Zone où la "cible" est détectable par 1 bouée : bouée A
Zone 1i      Zone où la "cible" est détectable par 1 bouée : bouée I
Zone 1j      Zone où la "cible" est détectable par 1 bouée : bouée J
Zone 2ai      Zone où la "cible" est détectable par 2 bouées : bouées A et I
Zone 2ij      Zone où la "cible" est détectable par 2 bouées : bouées I et J
Zone 2jb      Zone où la "cible" est détectable par 2 bouées : bouées J et B

On définit une zone géographique élémentaire comme une zone géographique à l'intérieur de laquelle tout bruiteur, en l'occurence la "cible", est toujours détectable par la (ou les) même(s) bouée(s), quelle que soit la position du bruiteur à l'intérieur de la zone.

On peut considérer, en outre, que tout ensemble de N bouées peut toujours se décomposer en un ensemble de cellules élémentaires de veille, chaque cellule élémentaire de veille étant constituée elle même de 2 bouées voisines.

Le nombre de cellules élémentaires de veille d'un ensemble de N bouées est variable et dépend essentiellement de la répartition géographique des bouées.

Dans le cas général, tel que représenté sur la figure 3, l'usage veut que l'on détermine (N - 1) cellules de veille adjacentes.

En se conformant à cet usage, on est donc en présence dans le cas particulier de la figure 3, des 3 cellules élémentaires de veille suivantes :

. cellule de veille (A-I)
. cellule de veille (I-J)
. cellule de veille (J-B)

En considérant la cellule de veille (I-J) comme cellule de base, on pourra de proche en proche étendre aux autres cellules élémentaires de veille le principe du procédé, appliqué à la cellule (I-J).

En se focalisant uniquement sur la cellule (I-J), on peut constater que la réunion des 2 domaines de détection/cible (Di et Dj, surlignés en figure 3) constitue en quelque sorte un sanctuaire dans lequel la "cible" est détectable par la bouée (I) et/ou par la bouée (J).

Etant donné que, pour l'exemple considéré, seule la cellule (I-J) nous intéresse, on peut exclure des zones géographiques précédentes les zones 1a et 1 b, zones où la "cible" n'est détectable ni par la bouée I ni par la bouée J.

En conséquence, les 5 zones géographiques intéressantes, que l'on nommera désormais "zones de consigne", et que l'on identifiera en caractères *"italiques"*, sont les suivantes :

Zone de "consigne" 1 *i*
Zone de "consigne" *1 j*
Zone de "consigne" *2 ai*
Zone de "consigne" 2 *ij*

Zone de "consigne" *2 jb*

Une zone de "consigne" peut se définir comme une zone géographique élémentaire dans laquelle la "cible" est réputée détectable par au moins l'une des 2 bouées (I ou J).

L'observation des zones de "consigne" ci-dessus permet de déduire que le nombre maximal Nmax de bouées "au contact", c'est-à-dire de bouées pouvant détecter, simultanément, le signal de la "cible", dans le "sanctuaire" I-J, est égal à 2 (Nmax = 2).

Pour les besoins de l'exposé on admet, par exemple, que la localisation d'un bruiteur acoustique quelconque peut s'effectuer à partir de la détection de la raie (F) émise par le bruiteur, par au moins n = 2 bouées de l'ensemble.

Conformément au schéma fonctionnel selon la figure 2 on peut suivre toutes les étapes du déroulement du procédé proposé, qui se termine obligatoirement par la conservation ou l'élimination de la raie (F), à savoir :

Etape 1 : Prise en compte des conditions de base : domaines de détection/cible des N bouées de l'ensemble et positions géographiques des N bouées de l'ensemble,

Etape 2 : Détermination des zones de "consigne et de Nmax, avec mise en mémoire des paramètres de "consigne" ainsi déterminés, et mise à jour, au cours du temps, des paramètres de "consigne",

Etape 3 : Vérification que la détection de la raie (F) concerne uniquement la cellule (I-J) (détection par I et/ou J sinon autre cellule de veille concernée),

Etape 4 : Comptabilisation du nombre de bouées (Nd) détectant la raie (F), sur l'ensemble des N bouées,

Etape 5 : si le nombre Nd de capteurs détectant la raie (F) est supérieur au nombre Nmax, la raie (F) est éliminée, : sinon, la raie (F) est conservée pour localisation du bruiteur acoustique (W) la rayonnant selon les étapes suivantes.

Etape 6 : définition des conditions de localisation du bruiteur
Si les conditions de localisation du bruiteur sont réunies, on procède à la localisation du bruiteur par l'étape 7 suivante. Sinon la raie (F) est conservée.

Etape 7 : localisation du bruiteur et détermination par rapport aux zones de consigne

Si le bruiteur se trouve dans l'une des zones de "consigne", on conserve la raie (F) comme pouvant provenir d'une cible.

Si le bruiteur se trouve en dehors de toute zone de "consigne", on élimine la raie (F).

Le procédé selon l'invention se place délibérément dans le cas où l'on s'efforce de réduire au maximum le volume de calcul lié à la localisation du bruiteur.

Si, pour diverses raisons, on éprouvait le besoin de procéder à la localisation systématique du bruiteur lorsque cela est possible, le premier test d'élimination de la raie de l'étape 5 ne serait pas nécessaire et il suffirait alors de passer directement de l'étape 4 à l'étape 6.

Afin de clarifier le fonctionnement du procédé on va appliquer les règles détaillées ci-dessus au schéma de la figure 3, en supposant, par exemple, la seule présence d'un bruiteur parasite (W) rayonnant une raie (F) d'énergie (Wdb), supérieure à l'énergie (Edb) de la "cible", à la fréquence (F).

On suppose que Wdb = Edb + 6db (environ) ce qui entraîne, par exemple, le doublement de la portée de détection du bruiteur W de chacune des N bouées de l'ensemble.

On peut donc considérer que pour une bouée X quelconque de l'ensemble, le nouveau domaine de détection/bruiteur (W) se déduit du domaine de détection/cible relatif à la bouée X par une homothétie de rapport K = 2 et ayant pour centre d'homothétie, la position géographique de la bouée X.

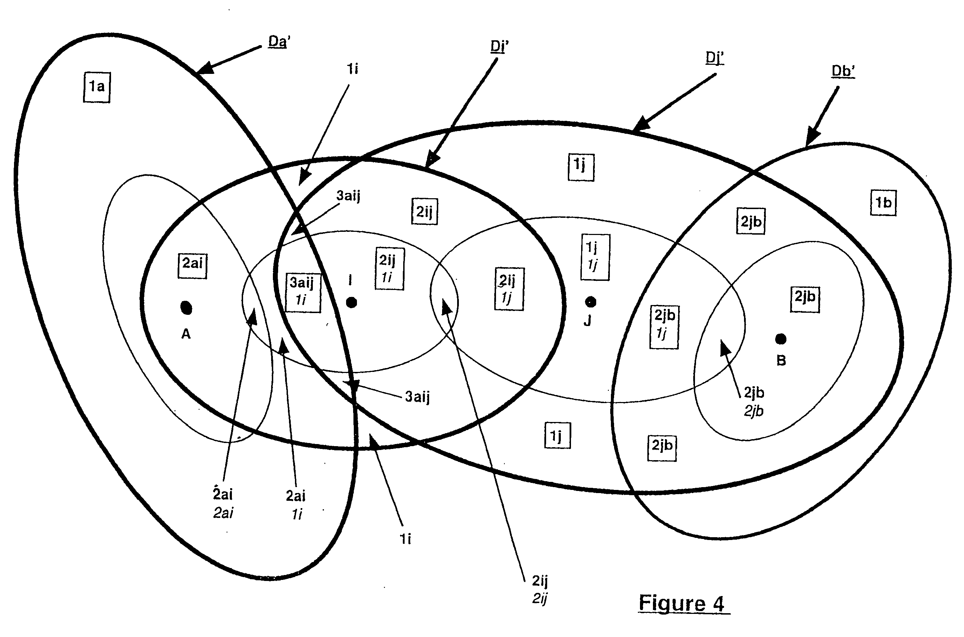

On trouve sur la figure 4, la représentation schématique des nouveaux domaines de détection d'un bruiteur (W) parasite d'énergie Wdb supérieure de 6 db environ à l'énergie Edb de la cible. Ces domaines sont désignés par D'a, D'i, D'j, D'b, et obtenus par homothétie de rapport K = 2, à partir respectivement, des domaines de détection/cible (Da, Di, Dj, Db), indiqués sur la figure 3.

Sur la figure 4, on a surligné les nouveaux domaines de détection/bruiteur (W) et on a conservé, pour mémoire, les domaines de détection/cible initiaux en traits fins à partir desquels les paramètres de "consigne" ont été déterminés et exploités par le procédé.

L'intersection des nouveaux domaines de détection/bruiteur (W) tels que D'a, D'i, D'j, D'b détermine l'existence de nouvelles zones géographiques élémentaires que l'on désigne d'une manière analogue à celle utilisée précédemment.

Pour faciliter la compréhension, on désigne les nouvelles zones par des caractères "standard" (ex. 3aij) alors que la désignation des zones de "consigne" demeure toujours en "italiques" (ex. : 2*ij*).

En supposant effectuées les étapes 1, 2, 3 du déroulement du procédé, on va aborder les étapes suivantes, en s'appuyant sur le schéma de la figure 4.

On rappelle, pour mémoire, que les paramètres de "consigne" connus et exploités par le procédé sont les suivants : zones (*2ai, 2ij, 2jb),* zones (*1i, 1j*), Nmax = 2.

L'étape 4 consiste en la comptabilisation du nombre de bouées (Nd) détectant la raie (F) sur l'ensemble des N bouées.

D'après la figure 4, il existe :

. 1 zone où Nd = 3 (3aij)

. 3 zones où Nd = 2 (2ai, 2ij, 2jb)

. 2 zones où Nd = 1 (1i, 1j)

L'étape 5 consiste en l'élimination des zones où Nd > Nmax

D'après le détail des zones ci-dessus, on voit que si le bruiteur (W) se trouve dans la zone (3aij), la raie (F) sera éliminée (Nd = 3 > Nmax = 2)

A l'étape 6, les conditions relatives à la localisation du bruiteur sont définies.

D'après le détail des zones précédentes, on peut en déduire que :

.si le bruiteur (W) se trouve dans l'une des zones (1i ou 1j) la raie (F) sera conservée (localisation impossible : Nd = 1 < n = 2)

.si le bruiteur (W) se trouve dans l'une des zones (2ai, 2ij, 2jb), il est nécessaire de procéder à la localisation du bruiteur (W).

Dans le cas non rencontré dans la disposition de la figure 4 où le bruiteur (W) se trouverait dans une zone "étrangère" aux zones de "consigne" (par exemple : zone 2ab), la raie (F) serait, systématiquement, éliminée (zone non connue du procédé).

L'étape 7 localise le bruiteur.

Selon le procédé de l'invention, on peut déduire que :

. si pour une zone géographique élémentaire donnée, la désignation de cette zone (en caractères "standard") est identique à la désignation de cette même zone (en caractères "italiques"), la zone considérée fait partie des zones de "consigne" et, de ce fait, la raie (F) sera conservée.

. dans le cas contraire, la zone considérée ne fait pas partie des zones de "consigne" et, de ce fait, la raie (F) sera éliminée.

L'examen de la figure 4 montre que l'application du procédé entraîne la conservation de la raie (F) si le bruiteur (W) se trouve dans l'une des zones suivantes :

. Zone 2ai / *2ai* Zone de "consigne"

. Zone 2ij / 2 *ij* Zone de "consigne"

. Zone 2jb / 2 *jb* Zone de "consigne"

. Zone 1j / *1j* Zone de "consigne" (localisation impossible)

. Zone 1i, 1j Zones de localisation impossible

Par rapport à l'objectif de réduction de fausses alarmes, il faut souligner que le bruiteur parasite (W) étant par définition une source de fausses alarmes (FA), le fait :

. de conserver la raie (F) revient à conserver une fausse alarme

. d'éliminer la raie (F) revient à éliminer une fausse alarme.

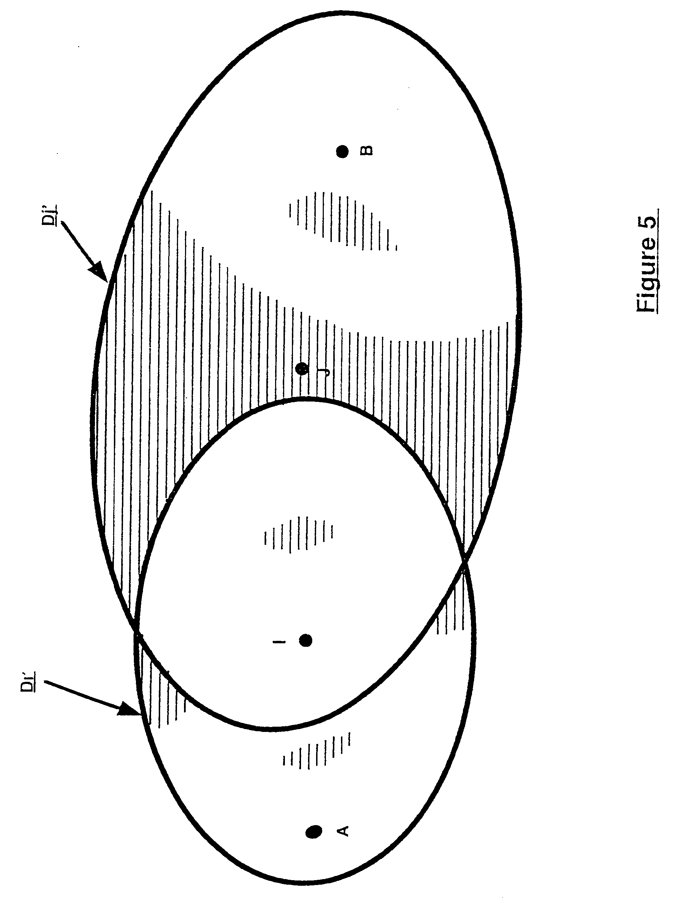

On trouve sur la figure 5 la délimitation des zones de fausses alarmes, résultant de l'application du procédé au cas particulier de la figure 4 et où les zones de fausses alarmes hachurées correspondent aux zones où l'on conserve la raie (F).

En admettant que le bruiteur parasite (W) puisse occuper, d'une manière homogène et uniforme, la totalité de la réunion des domaines D'i et D'j et en appelant :

. St la surface totale de la réunion des domaines D'i et D'j

. Sfa la somme des surfaces de fausses alarmes (zones hachurées de la figure 5),
on peut estimer le % de réduction de fausses alarmes selon la relation suivante :

$$\% \text{ de réduction (FA)} = (1 - Sfa/St) * 100$$

Une évaluation des surfaces de la figure 5 a permis d'estimer, d'une manière approximative, que la réduction de FA, dans le cas étudié (figures 3, 4, 5) était de l'ordre de 70 %.

On peut prédire que si l'énergie du bruiteur parasite (W) (toujours supérieure à l'énergie maximale E de la "cible") augmente, les domaines de détection/bruiteur (W) vont corrélativement augmenter, dans un rapport d'homothétie sensiblement égal à :

$$K = 10 \char`\^ \ [(Wdb-Edb)/20] \ ,$$

ce qui aura tendance à entraîner la présence de nombreuses zones géographiques élémentaires qui provoqueront un net accroissement :

. soit du nombre de bouées (Nd), détectant la raie (F), supérieur à Nmax,
. soit des zones "étrangères" aux zones de "consigne",
. soit des zones d'identification conformes aux zones de "consigne", mais non situées géographiquement à la position des zones de "consigne".

Cette situation aboutira à une décroissance rapide du taux de fausses alarmes et à une diminution rapide du % de volume de calcul de localisation en fonction de l'augmentation de l'énergie (W) du bruiteur parasite.

Généralement, la forme et/ou la dimension d'un domaine de détection/cible quelconque (D) relatif à un type de capteur acoustique donné, dépendent de la fréquence de la raie (F).

Dans le cas fréquent où le type de signal acoustique (S) rayonné par la "cible" est constitué d'un certain nombre (Nx) de raies spectrales et que l'on souhaite appliquer le procédé en mode veille, simultanément, sur Nf raies spectrales (avec Nf < ou = Nx), il faudra tenir compte de la variation du domaine de détection/cible (D) en fonction de la fréquence (F).

Un moyen pratique consiste à déterminer le domaine de détection/cible majorant unique D', en considérant le domaine global résultant de la réunion des Nf domaines de détection/cible (D, F), relatifs au domaine (D) et aux Nf raies spectrales sélectionnées.

Le nouveau domaine majorant D' définit ainsi le domaine de détection/cible relatif aux Nf raies spectrales à veiller simultanément.

On applique ensuite les règles de base du procédé à l'ensemble des N domaines de détection/cible majorants ainsi obtenus.

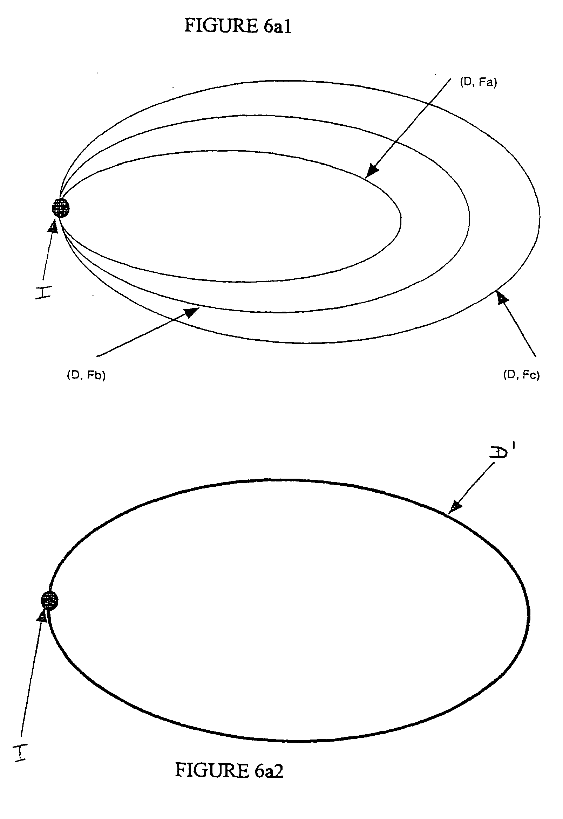

Sur les figures 6a1, 6a2, 6b1 et 6b2, on trouve une illustration pour un capteur I du principe de détermination du domaine de détection/cible majorant (D') relatif à un domaine de détection/cible quelconque (D), dans le cas où le signal acoustique (S) est constitué de Nf = 3 raies spectrales (Fa, Fb, Fc) et où l'on désire veiller simultanément la totalité des Nf (= 3) raies spectrales.

Chacune des raies spectrales (Fa, Fb, Fc) détermine respectivement des domaines de détection/cible particuliers (D, F) tels que :

Domaine de détection/cible (D, Fa)
Domaine de détection/cible (D, Fb)
Domaine de détection/cible (D, Fc)

Les figures 6a1, 6a2 représentent le cas très fréquent où le domaine majorant D', obtenu par la réunion des 3 domaines [(D, Fa), (D, Fb), (D, Fc)], est identique à l'un des domaines composites (ex. : D, Fc).

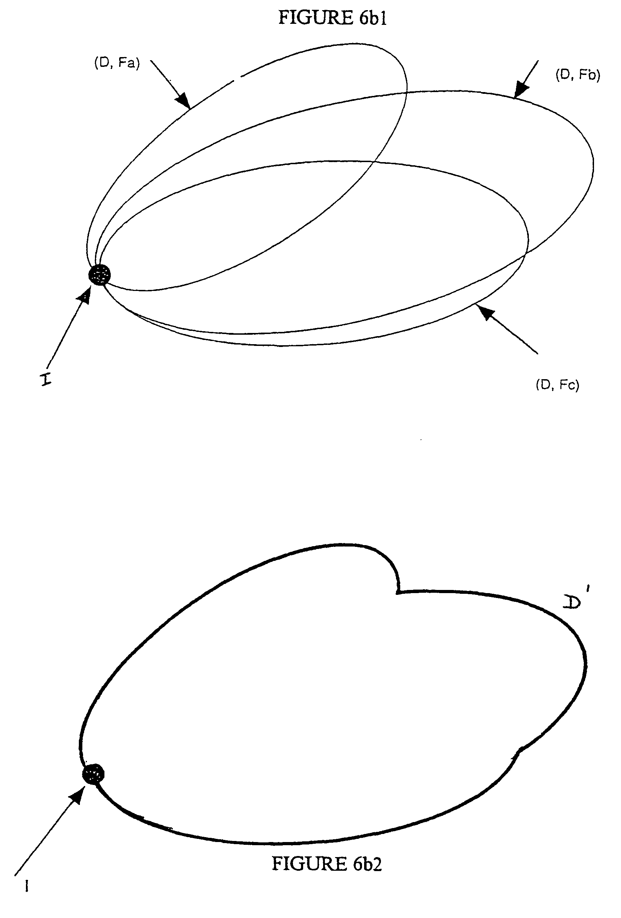

Les figures 6b1 et 6b2 représente le cas exceptionnel où le domaine majorant D', obtenu par la réunion des 3 domaines [(D, Fa), (D, Fb), (D, Fc)], est différent de l'un quelconque des 3 domaines composites.

Dans la réalité, la plupart des types de bouée usuels disposent de plusieurs domaines de détection/cible que l'on désigne sous le terme de "voies".

Ces voies peuvent être formées :

. soit à partir des caractéristiques intrinsèques du type de bouée concerné (ex. : "voies" cardioïdes d'une bouée de type Difar)

. soit à partir d'un groupement de capteurs acoustiques (ex. : "voies" d'une bouée de type BARRA ou d'un réseau de bouées)

D'une manière générale, on peut considérer que chaque voie constitue un domaine de détection/cible particulier.

Les "voies" d'un même type de bouée ont des domaines de détection/cible qui peuvent être différents ou identiques et ont des orientations angulaires différentes.

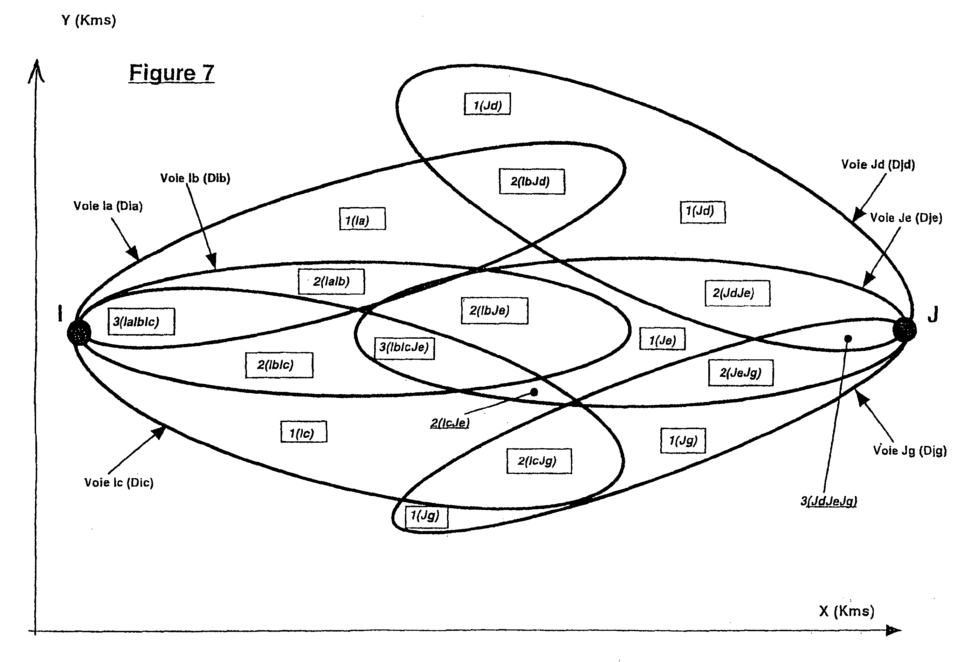

A titre d'exemple, on a représenté, sur la figure 7, la cellule de base (I-J), constituée de 2 types de bouée différents à plusieurs "voies".

Chacune des bouées (I et J) étant, par exemple, définie par 3 voies distinctes, de domaines de détection/cible et d'orientation angulaire différents.

Suivant le principe de désignation adopté, on peut écrire selon la figure 7 :

| | | | |
|---|---|---|---|
| Bouée I | Voie Ia | de domaine détection/cible | Dia |
| | Voie Ib | de domaine détection/cible | Dib |
| | Voie Ic | de domaine détection/cible | Dic |
| Bouée J | Voie Jd | de domaine détection/cible | Djd |
| | Voie Je | de domaine détection/cible | Dje |
| | Voie Jg | de domaine détection/cible | Djg |

Conformément aux règles de base du procédé, l'intersection des domaines de détection/cible des différentes voies crée des zones de "consigne", dont la réunion constitue le "sanctuaire" de détection/cible de la cellule (I-J).

On peut noter, à titre indicatif, la délimitation des "zones de "consigne" correspondantes (figure 7) :

3 zones (à 3 voies d'intersection)

| | | |
|---|---|---|
| 3 (I a I b I c) | "cible" détectable, à la fois, par les | Voies Ia, Ib, Ic |
| 3 (I b I c J e) | "cible" détectable, à la fois, par les | Voies Ib, Ic, Je |
| 3 (J d J e J g) | "cible" détectable, à la fois, par les | Voies Jd, Je, Jg |

8 zones (à 2 voies d'intersection)

| | | |
|---|---|---|
| 2 (I a I b) | "cible" détectable, à la fois, par les | Voies Ia, Ib |
| 2 (I b I c) | "cible" détectable, à la fois, par les | Voies Ib, Ic |
| 2 (I b J e) | "cible" détectable, à la fois, par les | Voies Ib, Je |
| 2 (I c J e) | "cible" détectable, à la fois, par les | Voies Ic, Je |
| 2 (I c j g) | "cible" détectable, à la fois, par les | Voies Ic, Jg |
| 2 (I b J d) | "cible" détectable, à la fois, par les | Voies Ib, Jd |
| 2 (J e J g) | "cible" détectable, à la fois, par les | Voies Je, Jg |
| 2 (J d J e) | "cible" détectable, à la fois, par les | Voies Jd, Je |

5 zones (à 1 voie)

| | | |
|---|---|---|
| 1 (I a) | "cible" détectable, uniquement, par la | Voie I a |
| 1 (I c) | "cible" détectable, uniquement, par la | Voie I c |
| 1 (J g) | "cible" détectable, uniquement, par la | Voie J g |
| 1 (J d) | "cible" détectable, uniquement, par la | Voie J d |
| 1 (J e) | "cible" détectable, uniquement, par la | Voie J e |

En fonction de la détermination des zones de "consigne" précédentes, on peut en déduire que Nmax = 3.

En initialisant les étapes 1 et 2 du procédé avec les nouveaux paramètres de "consigne", déterminés ci-dessus, et en tenant compte de la position des bouées I et J, on peut ensuite laisser dérouler le fonctionnement normal du procédé, conformément à la description précédemment effectuée.

Soient, à titre d'exemple non limitatif, Q "cibles" susceptibles d'émettre le même type de signal acoustique (S) composé, pour chacune des Q "cibles", d'un ensemble de Zq raies spectrales d'énergies respectives (Eq) différentes, et désignées de la façon suivante :

Cible A définie par Zam raies d'énergies respectives : Ea1, Ea2,...Eam,
Cible B définie par Zbk raies d'énergies respectives : Eb1, Eb2,....Ebk,

Cible Q définie par Zqp raies d'énergies respectives : Eq1, Eq2,....Eqp, et soit Nz le nombre total de raies à veiller simultanément, avec Nz = Zam+Zbk +...+Zqp. Il existe donc Nz domaines de détection/cible particuliers, relatifs à une "voie" V quelconque d'une bouée X de l'ensemble.

D'après le principe précédemment décrit on peut obtenir le domaine de détection/cible majorant unique, relatif à la "voie" V de la bouée X, par la réunion des Nz domaines de détection/cible particuliers définis ci-dessus.

D'une manière générale, on peut aisément concevoir que le principe du procédé, appliqué à la cellule de base (I-J), peut s'étendre, de proche en proche, à toutes les autres cellules de veille de l'ensemble.

D'une manière identique, le principe du procédé, appliqué à la raie (F) de la gamme de veille (Bw, Df), peut dans un premier temps, s'étendre à toutes les raies détectées de la gamme de veille (Bw, Df), et dans un deuxième temps, s'étendre à toutes les raies détectées dans les autres gammes de veille, si elles existent.

Le procédé selon l'invention peut bénéficier des méthodes classiques de mise en oeuvre selon les règles de l'art telles que, par exemple :

- localisation d'un bruiteur (W) à partir de bouées détectant la raie (F) avec le maximum de rapport S/B (amélioration de la précision de localisation);
- fusion de données telle que, par exemple, possibilité d'extension, de l'élimination de la raie (F) à toutes les gammes de veille détectant la raie (F), dans le cas où la raie a été préalablement éliminée par le procédé dans une gamme quelconque (Bw, Df);
- corrélation de la localisation acoustique d'un bruiteur (W) avec la situation surface (Radar, par exemple) afin de lever le doute sur l'identification d'un bruiteur (bâtiment de surface ou non);
- élimination, par associativité, de tout type de signal (S) dont la position géographique de la source d'émission coïnciderait avec la position géographique du bruiteur (W) rayonnant la raie (F) et déclaré « non cible » suite à l'application du procédé selon l'invention.

Considérant que la dérive différentielle des bouées est un phénomène lent (quelques mètres/minute) avec une faible périodicité de remise à jour des zones de "consigne", que le volume de calcul est faible (fort pourcentage d'élimination des FA sans calcul de localisation), que l'élimination d'une raie (F) dans une gamme quelconque (Bw, Df) peut entraîner l'élimination sans calcul de cette raie (F), sur toutes les gammes de veille concernées, on peut en déduire que la puissance de calcul dédiée à la mise en oeuvre du procédé devrait être très marginale, comparativement à la puissance de calcul d'un équipement de détection acoustique classique.

On peut remarquer en outre que l'application du procédé selon l'invention ne s'appuie que sur la prise en considération des signaux acoustiques, ce qui lui confère une totale autonomie ;en particulier, la connaissance de la situation géographique des bâtiments de surface, tout en étant utile, n'est pas nécessaire.

En conclusion, l'application du procédé selon l'invention permet de réduire, de façon très significative, le taux de fausses alarmes, de dégager l'opérateur de toute intervention manuelle par l'entière automatisation du fonctionnement, de s'adapter aisément aux diverses configurations d'ensembles de bouées, en mode veille.

En tout état de cause, l'application du procédé simplifie, d'une manière très significative, les problèmes liés au traitement des fausses alarmes et a une incidence très favorable sur le coût de réalisation d'un équipement de détection par bouées acoustiques.

En outre, compte tenu du fait que le procédé peut s'appliquer à tout type de capteur acoustique d'écoute ainsi qu'à tout type de signal acoustique sous réserve des conditions exigées, on peut envisager son application à tout dispositif d'écoute passive fixe ou mobile, exploité par des traitements de signaux actuels ou futurs.

Le procédé selon l'invention peut également être transposé au domaine de la détection acoustique aérienne.

## Revendications

**1.** Procédé de tri d'un signal acoustique (S) ou d'une raie spectrale (F) d'énergie maximale E, émis par une "cible", pouvant être immergée en mer, parmi une multitude de signaux acoustiques provenant de bruiteurs acoustiques quelconques (W), rayonnant des signaux acoustiques du même type et d'énergie supérieure à l'énergie E, mettant en oeuvre :

- un ensemble de N capteurs acoustiques, paramétrés de manière identique en mode veille, pouvant être immergés, destinés à détecter la présence du signal (S) ou d'une raie spectrale souhaitée (F),
- un système de localisation des capteurs,

**caractérisé en ce que** l'ensemble des N capteurs définit un nombre quelconque de cellules de veille à deux capteurs adjacents, chaque capteur étant associé à un ou plusieurs domaines de détection/cible, qui se définissent comme les zones géographiques à l'intérieur desquelles la présence de la "cible" est réputée détectable et en dehors desquelles la "cible" est réputée non détectable, et qu'il met en oeuvre:

- un ensemble de zones géographiques élémentaires déterminées par l'intersection de tous les domaines de détection/cible des N capteurs, chaque zone géographique élémentaire étant définie comme une zone géographique à l'intérieur de laquelle tout bruiteur acoustique est toujours détectable par les mêmes capteurs acoustiques,
- un ensemble de zones de "consigne" sélectionnées parmi l'ensemble des zones géographiques élémentaires précédentes, chaque zone de "consigne" relative à une même cellule de veille étant définie comme une zone géographique élémentaire à l'intérieur de laquelle la "cible" peut être détectable par au moins l'un des capteurs acoustiques de la cellule de veille,
- un nombre maximal Nmax de capteurs relatifs à une ou plusieurs zone(s) de "consigne" d'une même cellule de veille et pouvant détecter simultanément la "cible", et **en ce que** le signal acoustique (S) ou la raie (F) est détecté par un nombre Nd de capteurs acoustiques de l'ensemble des N capteurs, et analysé par la série des deux étapes consécutives suivantes :

1) définition des conditions de localisation du bruiteur (W) ; si ces conditions sont réunies, on procède à la localisation du bruiteur par l'étape 2 suivante, sinon le signal (S) ou la raie (F) est conservé;
2) localisation du bruiteur (W) et détermination par rapport aux zones de consigne : si le bruiteur (W) se trouve géographiquement à l'intérieur d'une des zones de "consigne", la signal (S) ou la raie (F) est conservé, sinon, le signal (S) ou la raie (F) est éliminé.

2. Procédé de tri d'un signal acoustique (S) ou d'une raie spectrale (F) d'énergie maximale E, émis par une "cible", pouvant être immergée en mer, parmi une multitude de signaux acoustiques provenant de bruiteurs acoustiques quelconques (W), rayonnant des signaux acoustiques du même type et d'énergie supérieure à l'énergie E, mettant en oeuvre :

- un ensemble de N capteurs acoustiques, paramétrés de manière identique en mode veille, pouvant être immergés, destinés à détecter la présence du signal (S) ou d'une raie spectrale souhaitée (F),
- un système de localisation des capteurs,

**caractérisé en ce que** l'ensemble des N capteurs définit un nombre quelconque de cellules de veille à deux capteurs adjacents, chaque capteur étant associé à un ou plusieurs domaines de détection/cible, qui se définissent comme les zones géographiques à l'intérieur desquelles la présence de la "cible" est réputée détectable et en dehors desquelles la "cible" est réputée non détectable, et qu'il met en oeuvre:

- un ensemble de zones géographiques élémentaires déterminées par l'intersection de tous les domaines de détection/cible des N capteurs, chaque zone géographique élémentaire étant définie comme une zone géographique à l'intérieur de laquelle tout bruiteur acoustique est toujours détectable par les mêmes capteurs acoustiques,
- un ensemble de zones de "consigne" sélectionnées parmi l'ensemble des zones géographiques élémentaires précédentes, chaque zone de "consigne" relative à une même cellule de veille étant définie comme une zone géographique élémentaire à l'intérieur de laquelle la "cible" peut être détectable par au moins fun des capteurs acoustiques de la cellule de veille,
- un nombre maximal Nmax de capteurs relatifs à une ou plusieurs zone(s) de "consigne" d'une même cellule de veille et pouvant détecter simultanément la "cible", et **en ce que** le signal acoustique (S) ou la raie (F) est détecté par un nombre Nd de capteurs acoustiques de l'ensemble des N capteurs, et analysé par la série des deux étapes consécutives suivantes :

1) si le nombre Nd de capteurs détectant le signal (S) ou la raie (F) est supérieur au nombre Nmax, le signal (S) ou la raie (F) est éliminé,
: sinon, le signal (S) ou la raie (F) est conservé pour localisation du bruiteur acoustique (W) rayonnant le signal (S) ou la raie (F);
2) définition des conditions de localisation du bruiteur (W); si ces conditions sont réunies, on procède à la localisation du bruiteur par l'étape 3 suivante, sinon le signal (S) ou la raie (F) est conservé;

3) localisation du bruiteur (W) et détermination par rapport aux zones de consigne :

si le bruiteur (W) se trouve géographiquement à l'intérieur d'une des zones de "consigne", le signal (S) ou la raie (F) est conservé, sinon, le signal (S) ou la raie (F) est éliminé.

**3.** Application du procédé selon l'une des revendications 1 ou 2 à la réduction de fausses alarmes émises par des bruiteurs non "cibles".

**Claims**

**1.** Method for sorting an acoustic signal (S) or a spectral line (F) of maximum energy E emitted by a "target", which may be submerged in the sea, from among a multitude of acoustic signals coming from arbitrary acoustic sources (W) radiating acoustic signals of the same type and with an energy greater than the energy E, employing:

- a set of N acoustic sensors which are parameterised identically in monitoring mode, may be submerged, and are intended to detect the presence of the signal (S) or a desired spectral line (F),
- a sensor localisation system,

**characterised in that** the set of N sensors defines an arbitrary number of monitoring cells with two adjacent sensors, each sensor being associated with one or more detection/target domains, which are defined as the geographical zones within which the presence of the "target" is deemed to be detectable and outside which the "target" is deemed to be not detectable, and **in that** it employs:

- a set of elementary geographical zones determined by the intersection of all the detection/target domains of the N sensors, each elementary geographical zone being defined as a geographical zone within which any acoustic source is always detectable by the same acoustic sensors,
- a set of "control" zones selected from among the set of aforementioned elementary geographical zones, each "control" zone relating to a given monitoring cell being defined as an elementary geographical zone within which the "target" may be detectable by at least one of the acoustic sensors of the monitoring cell,
- a maximum number Nmax of sensors relating to one or more "control" zone(s) of a given monitoring cell and capable of simultaneously detecting the "target", and **in that** the acoustic signal (S) or the line (F) is detected by a number Nd of acoustic sensors of the set of N sensors and analysed by the series of the following two consecutive steps:

1) definition of the localisation conditions of the source (W): if these conditions are consistent then the localisation of the source is carried out by the next step 2, otherwise the signal (S) or the line (F) is kept;
2) localisation of the source (W) and determination with respect to the control zones: if the source (W) lies geographically inside one of the "control" zones then the signal (S) or the line (F) is kept, otherwise the signal (S) or the line (F) is eliminated.

**2.** Method for sorting an acoustic signal (S) or a spectral line (F) of maximum energy E emitted by a "target", which may be submerged in the sea, from among a multitude of acoustic signals coming from arbitrary acoustic sources (W) radiating acoustic signals of the same type and with an energy greater than the energy E, employing:

- a set of N acoustic sensors which are parameterised identically in monitoring mode, may be submerged, and are intended to detect the presence of the signal (S) or a desired spectral line (F),
- a sensor localisation system,

**characterised in that** the set of N sensors defines an arbitrary number of monitoring cells with two adjacent sensors, each sensor being associated with one or more detection/target domains, which are defined as the geographical zones within which the presence of the "target" is deemed to be detectable and outside which the "target" is deemed to be not detectable,

and **in that** it employs:

- a set of elementary geographical zones determined by the intersection of all the detection/target domains of the N sensors, each elementary geographical zone being defined as a geographical zone within which any acoustic source is always detectable by the same acoustic sensors,
- a set of "control" zones selected from among the set of aforementioned elementary geographical zones, each "control" zone relating to a given monitoring cell being defined as an elementary geographical zone within which the "target" may be detectable by at least one of the acoustic sensors of the monitoring cell,
- a maximum number Nmax of sensors relating to one or more "control" zone(s) of a given monitoring cell and capable of simultaneously detecting the "target", and **in that** the acoustic signal (S) or the line (F) is detected by a number Nd of acoustic sensors of the set of N sensors and analysed by the series of the following two consecutive steps:

1) if the number Nd of sensors detecting the signal (S) or the line (F) is greater than the number Nmax then the signal (S) or the line (F) is eliminated:
otherwise the signal (S) or the line (F) is kept for localisation of the acoustic source (W) radiating the signal (S) or the line (F);
2) definition of the localisation conditions of the source (W): if these conditions are consistent then the localisation of the source is carried out by the next step 3, otherwise the signal (S) or the line (F) is kept;
3) localisation of the source (W) and determination with respect to the control zones: if the source (W) lies geographically inside one of the "control" zones then the signal (S) or the line (F) is kept, otherwise the signal (S) or the line (F) is eliminated.

**3.** Application of the method according to one of claims 1 and 2 to the reduction of false alarms emitted by sources which are not "targets".

**Patentansprüche**

**1.** Verfahren zum Klassifizieren eines akustischen Signals (S) oder einer Spektrallinie (F) mit maximaler Energie E, das bzw. die von einem "Ziel" ausgesendet wird, das im Meer untergetaucht sein kann, unter einer Vielzahl akustischer Signale, die von beliebigen akustischen Strahlern (W) stammen, die akustische Signale desselben Typs mit einer Energie, die größer als die Energie E ist, abstrahlen, wobei das Verfahren verwendet:

- eine Gesamtheit von N akustischen Wandlern, die in gleicher Weise in einer Überwachungsbetriebsart parametrisiert sind, die untergetaucht sein können und die dazu bestimmt sind, das Vorhandensein des gewünschten Signals (S) oder einer gewünschten Spektrallinie (F) zu erfassen,
- ein System zum Lokalisieren der Wandler,

**dadurch gekennzeichnet, dass** die Gesamtheit von N Wandlern eine beliebige Anzahl von Überwachungszellen mit jeweils zwei benachbarten Wandlern definiert, wobei jeder Wandler einer oder mehreren Erfassungs-/Ziel-Domänen zugeordnet ist, die als die geographischen Zonen definiert sind, innerhalb derer das Vorhandensein des "Ziels" erfassbar sein soll und außerhalb derer das "Ziel" nicht erfassbar sein soll,
und dass es verwendet:

- eine Gesamtheit von elementaren geographischen Zonen, die durch die Schnittmenge aller Erfassungs-/Ziel-Domänen der N Wandler bestimmt sind, wobei jede elementare geographische Zone als eine geographische Zone definiert ist, innerhalb derer jeder akustische Strahler stets durch dieselben akustischen Wandler erfassbar ist,
- eine Gesamtheit von "Soll"-Zonen, die aus der Gesamtheit der obigen elementaren geographischen Zonen ausgewählt sind, wobei jede "Soll"-Zone in Bezug auf dieselbe Überwachungszelle als eine elementare geographische Zone definiert ist, innerhalb derer das "Ziel" durch wenigstens einen der akustischen Wandler der Überwachungszelle erfasst werden kann,
- eine maximale Anzahl Nmax von Wandlern in Bezug auf eine oder auf mehrere "Soll"-Zonen derselben Überwachungszelle, die das "Ziel" gleichzeitig erfassen können,
und dass das akustische Signal (S) oder die Linie (F) durch eine Anzahl Nd akustischer Wandler der Gesamtheit von N Wandlern erfasst und durch die Reihe der zwei folgenden aufeinander folgenden Schritte analysiert werden kann:

1) Definieren der Bedingungen für die Lokalisierung des Strahlers (W): falls diese Bedingungen vorliegen, erfolgt die Lokalisierung des Strahlers durch den folgenden Schritt 2, andernfalls wird das Signal (S) oder die Linie (F) aufbewahrt;
2) Lokalisieren des Strahlers (W) und Bestimmen in Bezug auf Soll-Zonen: falls sich der Strahler (W) geographisch innerhalb einer der "Soll"-Zonen befindet, wird das Signal (S) oder die Linie (F) aufbewahrt, andernfalls wird das Signal (S) oder die Linie (F) beseitigt.

**2.** Verfahren zum Klassifizieren eines akustischen Signals (S) oder einer Spektrallinie (F) mit maximaler Energie E, das bzw. die von einem "Ziel" ausgesendet wird, das im Meer untergetaucht sein kann, unter einer Vielzahl akustischer Signale, die von beliebigen akustischen Strahlern (W) stammen, die akustische Signale desselben Typs und mit einer Energie, die größer als die Energie E ist, abstrahlen, wobei das Verfahren verwendet:

- eine Gesamtheit von N akustischen Wandlern, die auf gleiche Weise in einer Überwachungsbetriebsart parametrisiert sind, die untergetaucht sein können und die dazu bestimmt sind, das Vorhandensein des gewünschten Signals (S) oder einer gewünschten Spektrallinie (F) zu erfassen,
- ein System zum Lokalisieren der Wandler,

**dadurch gekennzeichnet, dass** die Gesamtheit von N Wandlern eine beliebige Anzahl von Überwachungszellen mit jeweils zwei benachbarten Wandlern definiert, wobei jeder Wandler einer oder mehreren Erfassungs-/Ziel-Domänen zugeordnet sein kann, die als die geographischen Zonen definiert sind, innerhalb derer das Vorhandensein des "Ziels" erfassbar sein soll und außerhalb derer das "Ziel" nicht erfassbar sein soll, und dass es verwendet:

- eine Gesamtheit von elementaren geographischen Zonen, die durch die Schnittmenge aller Erfassungs-/Ziel-Domänen der N Wandler bestimmt sind, wobei jede elementare geographische Zone als eine geographische Zone definiert ist, innerhalb derer jeder akustische Strahler stets durch dieselben akustischen Wandler erfassbar ist,
- eine Gesamtheit von "Soll"-Zonen, die aus der Gesamtheit der elementaren geographischen Zonen ausgewählt sind, wobei jede "Soll"-Zone in Bezug auf dieselbe Überwachungszelle als eine elementare geographische Zone definiert ist, innerhalb derer das "Ziel" durch wenigstens einen der akustischen Wandler der Überwachungszelle erfasst werden kann,
- eine maximale Anzahl Nmax von Wandlern, die auf eine oder auf mehrere "Soll"-Zonen derselben Überwachungszelle bezogen sind und gleichzeitig das "Ziel" erfassen können, und dass das akustische Signal (S) oder die Linie (F) durch eine Anzahl Nd von akustischen Wandlern der Gesamtheit von N Wandlern erfasst wird und durch die Reihe der zwei folgenden aufeinander folgenden Schritte analysiert wird:

1) falls die Anzahl Nd von Wandlern, die das Signal (S) oder die Linie (F) erfassen, größer als die Anzahl Nmax ist, wird das Signal (S) oder die Linie (F) beseitigt, andernfalls wird das Signal (S) oder die Linie (F) für die Lokalisierung des akustischen Strahlers (W), der das Signal (S) oder die Linie (F) abstrahlt, aufbewahrt;
2) Definieren der Bedingungen für die Lokalisierung des Strahlers (W): falls diese Bedingungen vorliegen, erfolgt die Lokalisierung des Strahlers durch den folgenden Schritt 3, andernfalls wird das Signal (S) oder die Linie (F) aufbewahrt;
3) Lokalisieren des Strahlers (W) und Bestimmen in Bezug auf Soll-Zonen:

falls sich der Strahler (W) geographisch innerhalb einer der "Soll"-Zonen befindet, wird das Signal (S) oder die Linie (F) aufbewahrt, andernfalls wird das Signal (S) oder die Linie (F) beseitigt.

**3.** Anwendung des Verfahrens nach einem der Ansprüche 1 oder 2 auf die Verringerung falscher Alarme, die von Strahlern, die nicht als "Ziele" gelten, ausgesendet werden.

Figure 1

EP 0 986 763 B1

**Figure 2**

Conservation de la raie (F)          Elimination de la raie (F)

Figure 3

Figure 4

EP 0 986 763 B1

Figure 5

EP 0 986 763 B1

## FIGURE 6a1

(D, Fa)

I

(D, Fb)

(D, Fc)

A'

I

## FIGURE 6a2

## FIGURE 6b1

(D, Fa)

(D, Fb)

(D, Fc)

I

D'

## FIGURE 6b2

I

Figure 7